# EUROPEAN PATENT APPLICATION

(11) **EP 3 179 270 A1**
(43) Date of publication of application: **14.06.2017**
(21) Application number: 16200337.0
(22) Date of filing: 23.11.2016
(51) Int. Cl.: G01S 17/02, G01S 17/93, G01S 13/93, G01S 13/86, G06K 9/00, B60W 30/12

(54) **LANE EXTENSION OF LANE-KEEPING SYSTEM BY RANGING-SENSOR FOR AUTOMATED VEHICLE**

(30) Priority: 08.12.2015 US 201514962114
(71) Applicant: Delphi Technologies, Inc., Troy, MI 48007 (US)
(72) Inventor: CHIA, Michael I., Cicero, Indiana 46034 (US); GREENE, Jeremy, S., MCCORDSVILLE, Indiana 46055 (US)
(74) Representative: Delphi France SAS

(57) **Abstract**

A lane-keeping system (10) suitable for use on an automated vehicle (12) includes a camera (16), a ranging-sensor (24), and a controller (30). The camera (16) is used to capture an image (18) of a roadway (20) traveled by a vehicle (12). The ranging-sensor (24) is used to detect a reflected-signal (26) reflected by an object (28) proximate to the roadway (20). The controller (30) is in communication with the camera (16) and the ranging-sensor (24). The controller (30) is configured to determine a lane-position (32) for the vehicle (12) based on a lane-marking (34) of the roadway (20). The controller (30) is also configured to determine an offset-distance (42) of the object (28) relative to the lane-position (32) based on the reflected-signal (26). The controller (30) is also configured to operate the vehicle (12) in accordance with the lane-position (32) when the lane-marking (34) is detected, and operate in accordance with the offset-distance (42) when the lane-marking (34) is not present.

## Description

### TECHNICAL FIELD OF INVENTION

This disclosure generally relates to a lane-keeping system for an automated vehicle, and more particularly relates to using a ranging-sensor to operate an automated vehicle when a lane-marking is not detected by a camera.

### BACKGROUND OF INVENTION

Systems that control to assist with lateral control (i.e. steering) of a fully-automated (i.e. autonomous) vehicle or a partially-automated vehicle that only steers the vehicle when a human operator needs assistance, or simply provides an alert to a human operator when necessary, have been suggested. Typically, a vision sensor or camera is the primary means to determine a lane-position relative to the lane markers on a roadway. However, a problem arises when vision information is not available, degraded, or otherwise unusable.

### SUMMARY OF THE INVENTION

The problem of not having sufficient vision information to operate a lateral control application can be solved by using frontal, side, and/or rear ranging-sensors. The system describe herein may be economically advantageous as these sensor are often already present for other sensing systems. Ranging sensors can include radars or lidars. These sensors can be employed to indicate distance to stationary or moving objects around the vehicle which can include curbs, barriers, walls, foliage, vegetation, terrain features, cars, trucks, and other roadway objects. For example, radars may already be installed on the vehicle for adaptive cruise control, crash avoidance and mitigation, blind spot warning or parking assistance. The combined use of vision and ranging sensor for identifying the scene around the host vehicle can provide a viable means to extend lane following control availability when vision data is temporarily unavailable.

Vision is typically the primary sensor for lane-keeping or lane following control, and is typically provided in the form of a frontally mounted camera which produces an indication of the lane direction by detecting the lane markers profile in front of the vehicle. Radar or lidar is the secondary sensing source which can in similar fashion map the terrain to generate contours along the roadway. The mapped contour that most strongly correlates with vision lane information is selected and calibrated relative to vision data to provide a secondary source of information for lane following control.

If lane markings fade and vision data becomes unavailable, radar/lidar mapped contour data which had been previously calibrated or correlated to available lane marker data when lane data was still available should still be present and can be used to continue the task of providing roadway information to the lane following control system. Lane following steering control based off radar/lidar can continue insofar as the confidence level of mapped data remains above a designated confidence threshold or until such time as estimated correlation between the two sensor's data will no longer exist.

Ranging sensors, whether radar or lidar, can detect roadway objects and vertical surfaces. With such sensors mounted at the front, side, and/or rear of the vehicle, mapping of roadway objects and edges can be carried out such that that detections can be useful enough to generate reference contours for limited steering control.

The system describe herein operates according to the following algorithm logic flow:
- Camera detects and measures lane markers providing data to controller;
- Radar/Lidar scans environment around vehicle providing a detection map;
- Mature higher confidence radar detection points are collected on a radar map;
- Processing is performed on radar/lidar detection map to generate contours parallel to a travel-path or travel-lane of the host-vehicle;
- Plausible candidate contours that meet criteria are submitted to controller;
- When both vision and ranging sensor data are available together, correlation and similarity measures are formed to establish positional relationships indicated by the data;
- Relative position and distances between vision and radar/lidar measurements are stored;
- If correlation no longer holds, vision and radar/lidar data is decoupled;
- When both camera and radar/lidar data are present with high confidence, automatic lane control steering is weighted towards use of camera detected data; and
- When radar/lidar data is only available (camera low or no confidence), automatic lane control shifts to use of radar/lidar data adjusted accordingly to the positional relationships noted previously.

As forward travel of the host-vehicle continues without vision data, and radar/lidar data ages, and no new vision data is available to refresh correlation, one of two possible automatic steering control strategies may be used: a) a more conservative approach: use radar/lidar data for only as long as same/similar detections are still present where these were last detected in vicinity of last confirmed vision lane data. That is, use radar data for particular section of roadway if same section of roadway was validated by vision; or b) a more aggressive approach (to maximize automatic lane control availability): Extrapolate radar/lidar detection linearly from what has been previously detected and continue to check if new radar/lidar detection points fall within bounds of extrapolated line. Furthermore, another check is made for parallelism with ego vehicle travel. If these conditions are met (i.e. true), radar/lidar data can be considered valid for continued steering control. If these conditions are not met (i.e. false), terminate steering control and wait for vision data to be reliable again. If no vision and radar/lidar data is correlated then no automatic steering control is allowed. When vision data in only available (camera high confidence) and radar/lidar does not have acceptable level of detections to form a steerable contour, no automatic steering control is allowed. When neither vision nor radar/lidar data is available, no automatic steering control is allowed. Fault and plausibility checks will be running concurrently to terminate steering control if necessary.

In accordance with one embodiment, a lane-keeping system suitable for use on an automated vehicle is provided. The system includes a camera, a ranging-sensor, and a controller. The camera is used to capture an image of a roadway traveled by a vehicle. The ranging-sensor is used to detect a reflected-signal reflected by an object proximate to the roadway. The controller is in communication with the camera and the ranging-sensor. The controller is configured to determine a lane-position for the vehicle based on a lane-marking of the roadway. The controller is also configured to determine an offset-distance of the object relative to the lane-position based on the reflected-signal. The controller is also configured to operate the vehicle in accordance with the lane-position when the lane-marking is detected, and operate in accordance with the offset-distance when the lane-marking is not present.

In another embodiment, the controller is further configured to determine a roadway-contour based on a lane-marking of the roadway, define a plurality of contoured-strips adjacent the roadway that correspond to the roadway-contour, select a control-strip from the plurality of contoured-strips in which the object resides, and determine the offset-distance based on a prior-offset of the roadway-contour and the control-strip.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is diagram of a lane-keeping system in accordance with one embodiment; and
Fig. 2 is a traffic scenario experienced by the system of Fig. 1 in accordance with one embodiment.

### DETAILED DESCRIPTION

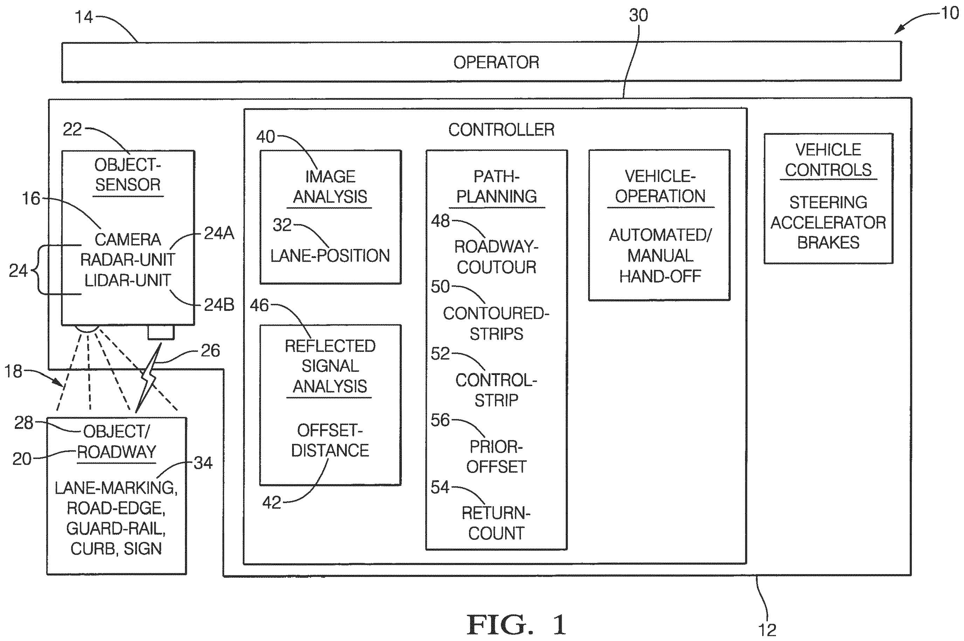

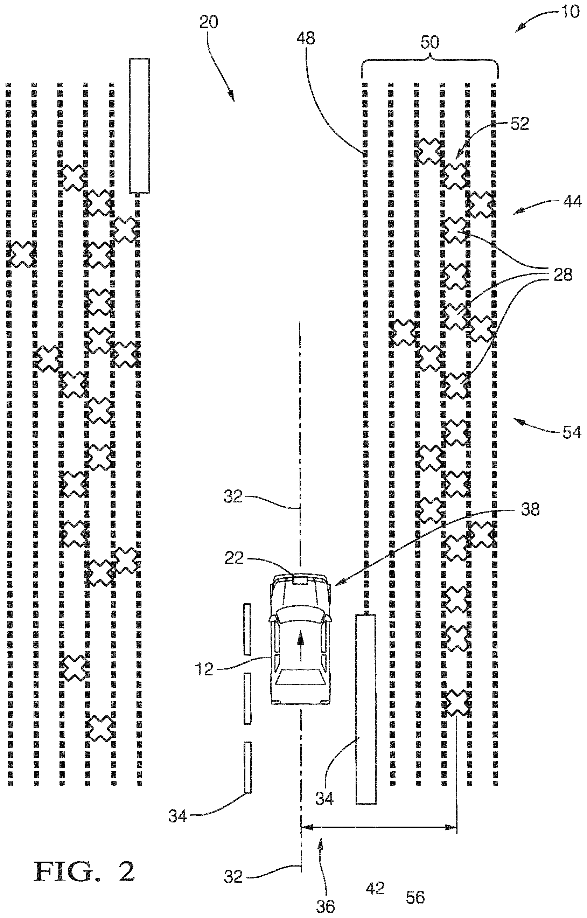

Figs. 1 and 2 illustrate a non-limiting example of a lane-keeping system 10, hereafter referred to as the system 10, suitable for use on an automated vehicle, hereafter referred to as the vehicle 12. It is contemplated that the vehicle 12 could be fully-automated or autonomous vehicle where an operator 14 merely indicates a destination and does not do anything to directly operate the vehicle 12 with regard to steering, acceleration, or braking. It is also contemplated that the vehicle 12 could be partially automated where the system 10 only operates the vehicle 12 during special circumstances, or merely provides an audible or visual warning to the operator 14 to assist the operator 14 when the operator 14 is in complete control of the steering, acceleration, and braking of the vehicle 12.

The system 10 includes a camera 16 used to capture an image 18 of a roadway 20 (Fig. 2) traveled by a vehicle 12. The camera 16 may be, but is not required to be, incorporated into an object-sensor 22 which may be centrally mounted on the vehicle 12. Alternatively the camera 16 and other sensors described herein may be distributed at various points on the vehicle 12 and used for multiple purposes as will become apparent in the description that follows. The camera 16 is preferably a video type camera or camera that can capture images of the roadway 20 and surrounding area a sufficient frame-rate, ten frames per second for example.

The system 10 also includes a ranging-sensor 24 used to detect a reflected-signal 26 reflected by an object 28 proximate to the roadway 20. As used herein, the ranging-sensor 24 is a type of sensor that is well suited to determine at least a range and azimuth angle from the ranging-sensor 24 to the object 28. Suitable examples of ranging sensors include, but are not limited to, a radar-unit 24A and a lidar-unit 24B. Examples of the radar-unit 24A and the lidar-unit 24B suitable for use on the vehicle 12 are commercially available.

The system 10 also includes a controller 30 in communication with the camera 16 and the ranging-sensor 24. The controller 30 may include a processor such as a microprocessor or other control circuitry such as analog and/or digital control circuitry including an application specific integrated circuit (ASIC) for processing data as should be evident to those in the art. The controller 30 may include memory, including non-volatile memory, such as electrically erasable programmable read-only memory (EEPROM) for storing one or more routines, thresholds, and captured data. The one or more routines may be executed by the processor to perform steps for determining if signals received by the controller 30 for can be used to operate (e.g. steer) the vehicle 12 as described herein.

The controller configured (e.g. programmed or hardwired) to determine a lane-position 32 on the roadway 20 for the vehicle 12 based on a lane-marking 34 of the roadway 20 detected by the camera 16. That is, the image 18 detected or captured by the camera 16 is processed by the controller 30 using known techniques for image-analysis 40 to determine where along the roadway 20 the vehicle should be operated or steered. Typically, the lane-position 32 is preferably in the middle of a travel-lane 36 of the roadway 20. However, it is contemplated that the lane-position 32 may be biased to some position that is not in the center of the travel-lane 36 in certain circumstances, for example when a pedestrian is walking near the edge of the roadway 20.

As shown in Fig. 2, prior to the vehicle 12 reaching the location 38 illustrated while traveling in the direction indicated by the arrow on the vehicle 12, the lane-marking 34 was generally sufficient to determine the lane-position 32. However, forward of the location 38, the lane marking is generally insufficient (non-existent in this example) for the system 10 to determine or follow the lane-position 32. While the illustration suggests that the lane-marking 34 has been removed or is not present, it is also contemplated that other reasons may be the cause for the camera 16 to fail to detect the lane-marking 34 such as, but not limited to, rain or dirt on the lens of the camera 16, operational failure of the camera 16, snow on the roadway 20, etc.

To overcome the problem of insufficient image information from the camera, the controller 30 is configured to determine an offset-distance 42 of the object 28 relative to the lane-position 32 based on the reflected-signal 26. That is, a reflected-signal-analysis 46 is performed by the controller 30 to process the reflected-signal 26 detected by the ranging-sensor 24 (the radar-unit 24A and/or the lidar-unit 24B) to determine where the object 28 is located in relation to the lane-position 32 when the lane-marking 34 is sufficient. The controller 30 operates the vehicle 12 in accordance with the lane-position 32 when the lane-marking 34 is detected or is sufficient, and operates the vehicle 12 in accordance with the offset-distance 42 when the lane-marking 34 is not present or is not sufficient. By way of further explanation, the controller 30 learns the offset-distance 42 when the relative position of lane-marking 34 and the object 28 can be determined by the object-sensor 22 so that if at some time in the future the lane-marking 34 cannot be detected, the controller 30 can continue to operate (e.g. steer) the vehicle 12 by maintaining the distance between the vehicle 12 and the object 28 that corresponds to the offset-distance 42.

Fig. 2 illustrates a non-limiting example of targets 44 indicated by the reflected-signal 26. In this example, most of the targets 44 are associated with a guard-rail adjacent to the roadway 20. As those in the radar arts will recognize, the reflected-signal 26 typically includes some noise, and there are resolution limitations on range and azimuth angle. As such, the targets 44 are not all perfectly aligned in a single file manner which would make the processing of radar signal rather easy. Also, some of the targets 44 may be due to debris, or sign-posts, or other object near the guard-rail, so determining which of the targets 44 can be used to determine the offset-distance is made more difficult. In order to determine the offset-distance 42 with some degree of confidence and reliability, several inventive steps may performed by the controller 30 to better determine the offset-distance 42 so the vehicle 12 can be more reliably operated when the image 18 of the lane-marking 34 is lost or obscured.

As a first step, the controller 30 determines a roadway-contour 48 based on the lane-marking 34 of the roadway 20. In Fig. 2, the roadway-contour 48 is straight. However, curved instances of the roadway-contour 48 are contemplated that could curve to the right or left, and the controller 30 may be further configured to determine a radius-or-curvature for the roadway-contour 48.

As a second step, the controller 30 defines a plurality of contoured-strips 50 adjacent the roadway 20 that correspond to the roadway-contour 48. In Fig. 2 the contoured-strips 50 are indicated by straight parallel gaps between straight parallel dotted lines because the roadway-contour 48 is straight. If the roadway 20 was curved, the contour-strips would be defined by curved lines with successively decreasing radius on the inside of the curve and successively increasing radius on the outside of the curve to establish multiple instances of relatively constant width instances of the contoured-strips.

As a third step, the controller 30 selects a control-strip 52 from the plurality of contoured-strips 50 in which the object 28 is believed to reside. As noted above, an object such as a guardrail in combination with other spaced apart objects could cause a plurality of reflected-returns that are each associated with or localized into one of the multiple instances of the plurality of contour-strips. That is, each of the targets 44 is assigned or associated with one of the contoured-strips 50 so multiple instance of the contour-strips have targets. By way of example and not limitation, the control-strip 52 may be selected based on a return-count indicative of the number of reflected-returns in the control-strip. As a specific example, the control-strip may be the one of the contoured-strips 50 that has the greatest return-count (i.e. the greatest number of the targets 44) of the plurality of contoured-strips 50.

As a fourth step, the controller 30 determines the offset-distance 42 based on a prior-offset 56 of the roadway-contour 48 and the control-strip 52. That is, the prior-offset 56 is determined while the lane-marking 34 is detected by the system 10, and the value of the prior-offset 56 is used to determine the offset-distance 42 by which the vehicle 12 is operated when the lane-marking 34 stops being detected by the system 10.

Accordingly, a lane-keeping system 10, a controller 30 for the system 10, and a method of operating the system 10 according to the steps describe above is provided. The system 10 provides for extended lane-keeping operation of the vehicle 12 for some time after the lane-marking 34 is not detected. How long the vehicle can operate without the lane-marking 34 is determined by a number of factors including the roadway-contour 48 prior to the lane-marking 34 being 'lost', the consistency of the targets 44 in the control-strip 52, and the presence of other targets along the roadway 20.

While this invention has been described in terms of the preferred embodiments thereof, it is not intended to be so limited, but rather only to the extent set forth in the claims that follow.

## Claims

1. A lane-keeping system (10) suitable for use on an automated vehicle (12), said system (10) comprising:
a camera (16) used to capture an image (18) of a roadway (20) traveled by a vehicle (12);
a ranging-sensor (24) used to detect a reflected-signal (26) reflected by an object (28) proximate to the roadway (20); and
a controller (30) in communication with the camera (16) and the ranging-sensor (24), said controller (30) configured to
determine a lane-position (32) for the vehicle (12) based on a lane-marking (34) of the roadway (20);
determine an offset-distance (42) of the object (28) relative to the lane-position (32) based on the reflected-signal (26); and
operate the vehicle (12) in accordance with the lane-position (32) when the lane-marking (34) is detected, and operate in accordance with the offset-distance (42) when the lane-marking (34) is not present.

2. The system (10) in accordance with claim 1, wherein the ranging-sensor (24) is a radar-unit (24A) or a lidar-unit (24B)

3. The system (10) in accordance with claim 1 or 2, wherein the controller (30) is further configured to
determine a roadway-contour (48) based on a lane-marking (34) of the roadway (20);
define a plurality of contoured-strips (50) adjacent the roadway (20) that correspond to the roadway-contour (48);
select a control-strip (52) from the plurality of contoured-strips (50) in which the object (28) resides; and
determine the offset-distance (42) based on a prior-offset (56) of the roadway-contour (48) and the control-strip (52).

4. The system (10) in accordance with claim 3, wherein when the object (28) causes a plurality of reflected-returns that are each associated with one of multiple instances of the plurality of contour-strips, and the control-strip (52) is selected based on a return-count indicative of the number of reflected-returns in the control-strip (52).

5. The system (10) in accordance with claim 4, wherein when the control-strip (52) has the greatest return-count of the plurality of contour-strips.
